Europäisches Patentamt

European Patent Office

Office européen des brevets

(19)

(11) **EP 1 331 811 A1**

(12) **EUROPEAN PATENT APPLICATION**

(43) Date of publication:
**30.07.2003 Bulletin 2003/31**

(51) Int Cl.⁷: $H04N\ 5/44$

(21) Application number: **02075302.6**

(22) Date of filing: **24.01.2002**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **Koninklijke Philips Electronics N.V.
5621 BA Eindhoven (NL)**

(72) Inventor: **The designation of the inventor has not
yet been filed**

(74) Representative: **Steenbeek, Leonardus Johannes
INTERNATIONAAL OCTROOIBUREAU B.V.,
Prof. Holstlaan 6
5656 AA Eindhoven (NL)**

(54) **Television receiver circuit**

(57)    Television receiver circuit including a tuner (1) including an Automatic Gain Control (30, 40) for controlling the gain of the tuner (1), and a first IF-section (60) being coupled to the output (25) of the tuner (1), the first IF-section being designed for processing analog TV signals, characterized by a second IF-section (80) for processing digital TV-signals, wherein the AGC of the tuner (1) includes a first AGC-loop (30) for controlling the gain (g1) of a first tuner section (2) at the tuner input, and a second AGC-loop (40) for controlling the gain (g2) of a second tuner section (3) at the tuner output.

FIG.3

**Description**

The invention relates to a television receiver circuit including a tuner including an Automatic Gain Control for controlling the gain of the tuner, and a first IF-section being coupled to the output of the tuner, the first IF-section being designed for processing analog TV signals.

Description of the Prior Art

GB 2 004 428 A1 describes a known television receiver circuit. The antenna filter has some selectivity in front of the input amplifier, preferably a field effect transistor (FET), to match the antenna impedance to the amplifier impedance. The filter behind the input amplifier is a double tuned bandpass filter realizing the main high frequency selectivity and the image suppression of the tuner. The signal will be downconverted by a mixer, which is driven by the local oscillator signal, to an intermediate frequency (IF) for example 36MHz. The output of the mixer is buffered by a buffer amplifier to drive the IF-section of the receiver circuit. In a television tuner for analog transmission standards, three different channels are used to cover the television frequency band between 45 and 860 MHz. This implies that a tuner needs three antenna filters, input amplifiers, double bandpass filters, mixers to realize three separate frequency channels.

The Automatic Gain Control for input amplifier is derived from the IF-demodulator at the output of the IF-section. Accordingly, gain control is obtained by the tuned channel N only as the AGC-detector for the Automatic Gain Control (AGC) is behind the IF-filter, which is preferably a surface acoustic wave filter (SAW filter). Therefore, any neighbor channels on N±1 or N±2 or further away from the tuned channel N will have no influence on the AGC. As a result, strong neighbor channels can run the buffer amplifier into problems due to a too high gain for good signal processing. Particularly, this would strongly affect the tuned channel due to clipping behavior of the buffer amplifier. Additionally, the local oscillator of the mixer would be adversely affected due to coupling between the buffer amplifier and the local oscillator of the mixer, for example via the substrate.

To avoid the above described disadvantages, it is also known from GB 2 004 428 to connect the AGC-detector in front of the SAW filter of the IF-circuit section. Detecting the signal level for the Automatic Gain Control in front of the SAW filter implies that high power neighbor channels N±1 or N±2 or further away from the tuned channel N will influence the AGC behavior of the tuner. When there is only the channel N present at the input of the tuner, no change of the standard level of the Take Over Point (TOP-level) of the AGC is necessary. But when strong neighbor channels close to the wanted channel N are present at the input of the tuner, the Automatic Gain Control AGC will attenuate the total signal.

With three channels close to each other having a supposed equal power level at the input of the tuner, the Automatic Gain Control AGC will start to attenuate 10dB earlier compared to the situation in which only the channel N is present (the sum of three equal signals is 10dB higher as compared to one signal). The attenuation of the input amplifier will deteriorate the noise figure of the tuner and as a consequence, the signal/noise-ratio of the tuned channel will decrease. Therefore, the start of the Automatic Gain Control, i.e. the Take Over Point (TOP-level) should be at the highest possible level to avoid the signal/noise-ratio deterioration. In view of this, the TOP level of this known embodiment at the tuner input should be 70dBμV as compared to 60dBμV in a tuner having the AGC voltage derived from the IF-demodulator.

Recently, digital TV transmission has become of more and more importance, and there is therefore a need for TV receiver circuits that are operable on analog transmission and/or on digital transmission. The transmission standard for digital TV transmission, and particularly for the DVB-T transmission standard is provided as the so-called NorDig-Standard. When however, any TV-receiver will receive any digital channel, or analog channels, neighbor digital channels and neighbor analog channels may be additionally received. Thus, any digital receiver has to fulfil the DVB-T transmission standard concerning the "requirements of interoperability" as specified by NorDig. The DVB-T standard allows neighbor channels that are not allowed in analog TV transmission. For example, DVB-T allows analog N±1 neighbor channels with 35dB or analog N±2 neighbor channels with 50dB more level than the wanted digital channel. Further, DVB-T standard specifies digital N±1 neighbor channels with 30dB or digital N±2 neighbor channels with 50dB more level than the wanted digital channel. This specification is very difficult to meet as compared to the specification of analog reception. Therefore, to be compliant to the specification extra measures have to be taken in digital TV tuners. To fulfil the NorDig specification for digital TV transmission, the gain of the tuner must be reduced from the 45dB analog standard to 35dB to cope with large input signals, i.e. with the kind of channel situation specified in the NorDig specification.

Summary of the Invention

Modern TV receivers should be able to receive analog TV signals and digital TV signals respectively. Therefore, there is a need for a television receiver circuit which processes both analog and digital TV transmission signals, solving the problems related to large dynamic range between analog and digital transmission specified in the NorDig specification, making the reception with one tuner possible. To this end, the invention provides a television receiver circuit and a tuner as defined in the independent claims. Advantageous embodiments are defined in the dependent claims.

The television receiver circuit according to the invention realizes a hybrid solution for analog reception and digital reception, respectively. At the output of the tuner there is connected a first IF-section having the channel specifics for processing analog TV transmission signals. At the output of the tuner, in parallel to the first IF-section, there is connected a second IF-section having the channel specifics for processing digital TV transmission signals, so that analog IF-signals pass the first IF-section whereas digital TV signals pass the second IF-section.

The architecture of the tuner in front of the two IF-sections is designed such that the tuner may receive and process analog signals and digital (DVB-T) signals without switching functions or switching gain and without switching the automatic gain control of the tuner.

In accordance with the invention, the Automatic Gain Control of the tuner includes a first AGC-loop for controlling the gain of a first tuner section at the input, and it includes a second AGC-loop for controlling the gain g1 of a second tuner section at the tuner output. By these features, the total gain of the tuner is split up into two parts. If gain reduction is required due to high total signal level at the tuner input, the gain g2 of the second tuner section is automatically reduced if only a small gain reduction is required so that the signal/noise-ratio of the tuner input will not be effected, and the realized overall gain reduction of the tuner will have minimum influence on the overall signal/noise-ratio. Only for very high input levels at the tuner input, which may be the case if strong analog or digital neighbor channels are present in digital TV or if strong analog neighbor channels are present in analog TV operation, the AGC-loop of the first tuner section will become active and additionally reduce the gain of this section, affecting the signal/noise-ratio negatively.

Thus, the television receiver circuit according to this invention solves the problem related to large dynamic range between analog and digital transmission specified in the NorDig specification, it makes analog reception and digital reception possible with one tuner, without switching the tuner parameters, simply by splitting the tuner in two sections and by automatically controlling and reducing the respective gain of the two sections, if the input signal is too high due to strong neighboring analog or digital channels.

In accordance with the invention, the input of the second tuner section is coupled to the output of the first tuner section, i.e. both tuner sections are connected in series.

In accordance with the preferred embodiment of the invention, the input of the first tuner section is the input of the tuner, and the output of the second tuner section is identical with the output of the tuner.

The first tuner section has a pre-given maximum output level MOUT1 at the first tuner section output, a maximum gain G1 and a pre-given take over point level TOP1 at which the first AGC-loop is taking over control. Also, the second tuner section has a pre-given maximum output level MOUT2 at the second tuner section output, a maximum gain G2 and a pre-given take over point level TOP2 at the second tuner section input, and the second AGC-loop is taking over control at this TOP2-level. In accordance with the preferred embodiment of the invention, the take over point-level of the second tuner section at the input of the second tuner section (which is identical with the output of the first tuner section) is set to a value which is smaller than the maximum output level of the first tuner section; preferably, the take over point level TOP2 of the second tuner section is set to

$$TOP2 = MOUT1 - G2,$$

i.e. the level TOP2 equals the maximum output level MOUT1 reduced by the maximum gain G2 of the second tuner section. This condition implies that the automatic gain control of the second tuner sections starts before the output level of the first tuner section arrives at its maximum output level. Thus, the gain of the second tuner section will reduce before the maximum output of the tuner section is reached. According to this design, any reduction in total gain of the tuner will start at the gain of the second tuner section as long as the output level of the first section is below its maximum MOUT1. When the input level of the tuner is increasing further, so that the output of the first tuner section reaches the maximum MOUT1, then the fist AGC-loop will - in addition - continuously reduce the gain of the first tuner section. By these features, the automatic gain control of the tuner will first reduce the gain at the second tuner section, i. e. at the output of the tuner, leaving the gain at the first tuner section, and i.e. at the input of the tuner unchanged. The gain of the first tuner section, i.e. at the input of the tuner will change only at very high input levels of the TV carriers. Any gain reduction at the second tuner section, at the tuner output, has however, much less influence on the signal/noise-ratio of the tuner than the gain reduction of the first tuner section, this being one main advantage of the circuit according to the invention.

Preferably, the maximum output level MOUT1 equals the maximum output level MOUT2 of the second tuner section. By this condition, the second AGC-loop will reduce the gain of the second tuner section as long as the output of the first tuner section is less than MOUT1; when the output level of the first tuner section arrives at its maximum value MOUT1 which equals MOUT2, the gain of the second tuner section will be reduced to zero value, and the first AGC-loop will only then start reducing the gain of the first tuner section. This implementation, MOUT1 = MOUT2 thus make the tuner more effective, i.e. the gain reduction of the second tuner section will reduce to zero gain before the first tuner section starts gain reduction, so as to avoid unnecessary decrease of a signal/noise-ratio at the tuner input.

With a wideband tuner AGC-system, the tuner input may see the sum of three carriers. Provided each carrier has a voltage level of 70dBμV, this results in a total voltage of 80dbμV. In accordance with the invention, the Take Over Point level TOP1 at the input of the first AGC-loop is aligned to 70dBμV, so that the carrier which passes one of the two IF-sections will contribute to this TOP level by 60dBμV, i.e. by one third of the total input TOP level. This embodiment will cope with the conventional tuners for analog transmission standards which have a small band automatic gain control, deriving the AGC-signal at the output of the IF-section, and which has an TOP level at the tuner input at 60dBμV.

The first tuner section includes preferably an antenna filter, an input amplifier, a bandpass and a mixer, the mixer output being the output of the first tuner section. The second tuner section follows in series the first tuner section and includes a buffer amplifier; the output of the second tuner section is identical with the output of the tuner.

Preferably, the first IF-signal path filter includes a surface acoustic wave filter SAW, having a pre-given channel selectivity, so that only an analog channel with the respective frequency passes.

The second IF-section is designed for digital TV transmission signals, the second IF-signal path filter has a corresponding selectivity, it includes in series a first surface acoustic wave filter, an amplifier for compensating the attenuation of this SAW filter, and a second SAW filter. The attenuation of the SAW filters in the second IF-signal path filter is set to -20dB, the amplifier has a gain of +20dB.

Brief Description of the Drawings

Now, the present invention will be described hereinafter with reference to the accompanying drawings, wherein

Fig. 1 is a block diagram of a prior art television receiver circuit for analog reception;
Fig. 2 is a block diagram of a further prior art television receiver circuit for analog reception; and
Fig. 3 is a block diagram of the television receiver circuit according to the invention.

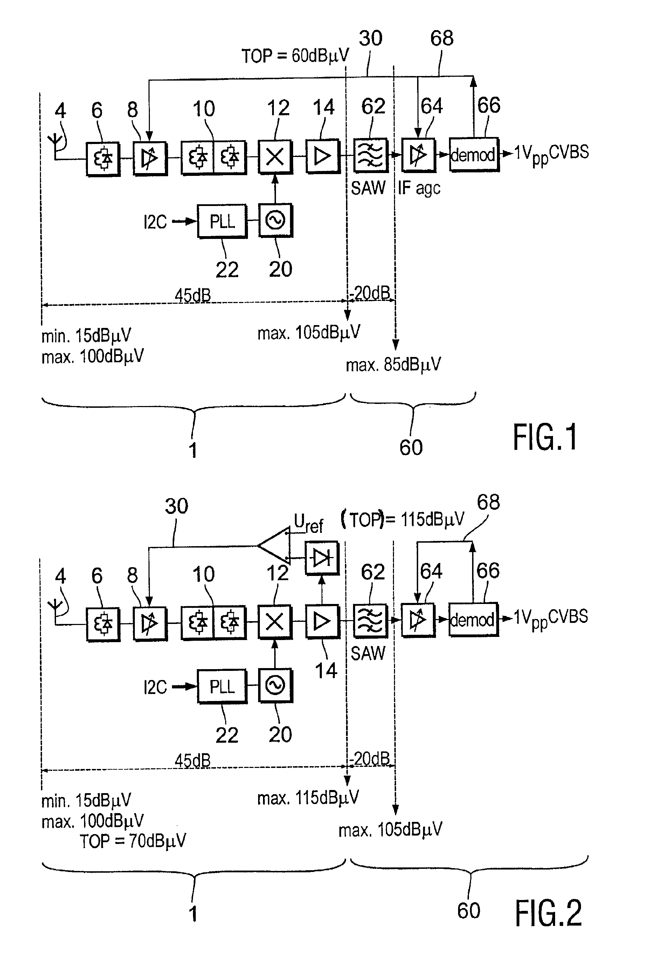

Figs. 1 and 2 show two different prior art television receiver circuits for analog transmission standards. The antenna 4 is followed by an antenna filter 6 to have some selectivity in front of an input amplifier 8 which is realized as Field Effect Transistor FET, which is used for amplification and Automatic Gain Control AGC. The filter 10 behind the FET is a double tuned bandpass filter realizing the main high frequency selectivity and the image suppression of the tuner. The signal will be downconverted to an intermediate frequency IF of for example 36MHz, the mixer 12 being driven by a local oscillator 20, 22. The output of the mixer 12 is buffered by a buffer amplifier 14, to drive a surface acoustic wave filter 62, called SAW filter, which is given the required channel selectivity. Behind the SAW filter 62, also called IF-filter, is an IF-amplifier 64, which is followed by an IF-demodulator 66. In this known receiver circuit, the AGC-derives the AGC voltage to control the gain of the FET from the IF-demodulator 66, i.e. the gain control is pertained by the tuned channel N only, as the AGC control is detected behind the IF-filter 62 (SAW filter). Therefore, any neighbor channels N±1 or N±2 or further away from the tuned channel will have no influence on the gain control. As a result, strong neighbor channels may run the buffer amplifier 14 into problems due to a too high gain for good signal processing.

In Fig. 2, a prior art television receiver circuit is shown, the circuit elements corresponding to the elements of Fig. 1 having the same reference numerals. Due to the disadvantages of the behavior of AGC as shown in Fig. 1, the AGC-detector of the prior art circuit according to Fig. 2 is implemented in front of the IF-filter 62, so that the AGC-detector measures the signal when neighbor signals are still present and have an influence on the AGC behavior of the tuner.

As long as there is only one channel present at the input of the tuner, no change of the standard TOP-level is necessary. However, as strong neighbor channels close to the wanted channel may be present at the input of the tuner, the AGC will attenuate the total signal. If, for example a free channel is close to two neighboring channels with equal level at the input of the tuner, the AGC will start to attenuate 10dB earlier as compared to a one channel situation. As a consequence the signal/noise-ratio of the tuned channel will decrease. To avoid this deterioration, the Take Over Point level of the AGC is set to 70dBμV, i.e. 10dBμV above the standard TOP level of Fig. 1.

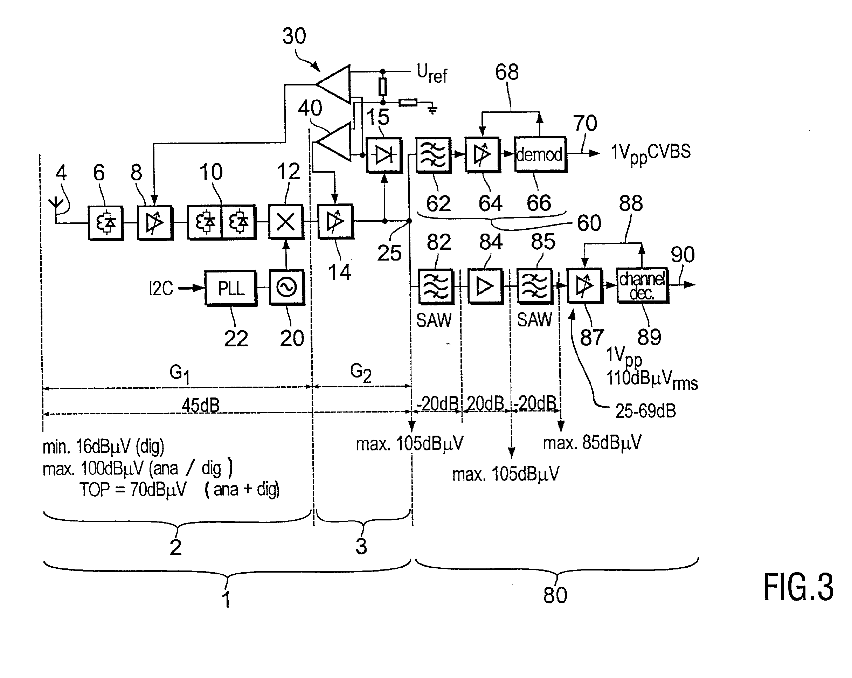

Fig. 3 is a block diagram of a television receiver circuit according to the invention. The circuit includes a tuner 1 including in series the antenna 4, an antenna filter 6, an input amplifier 8, a bandpass filter 10, a mixer 12 including a local oscillator 20, 22. The mixer 12 converts the signal down to an IF-signal that is amplified in a buffer amplifier 14. The output 25 of the buffer amplifier defines the output of the tuner 1.

Attached to the output 25 of the tuner 1 is a first IF-section, designed for processing analog TV signals. The first IF-section 60 includes in series a first IF-signal path filter, cf. an SAW filter having the required channel selectivity. The IF-signal path filter is followed by a first IF-amplifier 64 and a first IF-demodulator 66, at the output 70 of which a video output signal is provided for further processing.

Attached to the output 25 of the tuner 1 is a second IF-section 80 for processing digital TV-signals, the second IF-section 80 includes a second IF-path filter 82, 84, 85, this filter including a first SAW filter 82, a filter amplifier 84 and a second SAW filter 85. Behind the filter 82, 84, 85 lies a channel amplifier 87 followed by a channel decoder, the output 90 of which provides a video output signal of further processing.

The tuner 1 is split in two sections, a first tuner section 2, followed by a second tuner section 3. The first tuner section 2 includes the antenna filter 6, the input amplifier 8, the bandpass filter 10 and the mixer 12. The second tuner section 3 includes the buffer amplifier 14, the output of the second tuner section being the output of the tuner.

The tuner 1 includes an Automatic Gain Control which is also split into two AGC-loops, the first AGC-loop 30 being associated to the first tuner section 2, controlling the gain g2 of this section. The second AGC-loop 40 is associated to the second tuner section 3, controlling the gain g2 of this section. Both AGC-loops 30, 40 provide automatic gain control for the total gain g1 + g2. The first tuner section 2 is defined by the following parameters: A maximum output level MOUT1, a maximum gain G1 and a pre-given Take Over Point level TOP1 at the input of the first tuner section 2, the TOP-level TOP1 being the signal level at which the first AGC-loop 30 is activated.

The second tuner section 3 is defined by the following parameters: A pre-given maximum output level MOUT2 at its output, a maximum gain G2 and a pre-given take over point level TOP2 at the section input, at which the second AGC-loop 40 is activated. The total maximum gain of the tuner is defined by g1 + g2, and the TOP-level TOP2 at the input of the second tuner section is set to

$$TOP2 = MOUT1 - G2,$$

so that the second AGC-loop is activated already before the output of the first tuner section 2 arrives at its maximum value MOUT1. Thus, upon increasing signal levels at the tuner input the second AGC-loop 40 starts to reduce the gain of the second tuner section 3 before the first AGC-loop 30 is activated, so that the total gain of the tuner is first reduced at the second tuner section, i. e. at the output of the tuner. Only at very high signal levels at the tuner input, gain reduction will also take place at the first tuner section 2, i.e. at the input of the tuner.

Preferably, the maximum output MOUT2 at the second tuner section is set to be identical with the output of the first tuner section MOUT1. This implies that the second AGC-loop first reduces the gain of the second tuner section to a zero value, i.e. until MOUT1 reaches MOUT2, g2=0. The first AGC-loop 30 will be activated to reduce g1 only if the signal level at the tuner input is even higher.

The first AGC-loop 30 derives the AGC-signal from an AGC-detector 15, which is coupled at the output of the second tuner section 3, i.e. at the buffer amplifier 14. The AGC-control signal of the first AGC-loop 30 is fed to the input amplifier 8.

The second AGC-loop 40 derives its AGC-signal also at the output of the second tuner section 3, it derives the AGC-signal preferably from the same AGC-detector 15 which is used for the first AGC-loop 30, and it feeds the AGC-control signal to the input of the buffer amplifier 14. To comply with the analog TV reception and digital TV reception, and to comply particularly with the NorDic standard concerning "NorDic II digital integrated receiver decoder" specifications, the parameters of the first tuner sections are 105dBμV as maximum output level at the output of the first section, i.e. at the output of the mixer 12. The maximum gain G1 is 35dBμV, and the TOP-level TOP1 at the input of the first tuner section is 70dBμV. For the second tuner section, the maximum output level MOUT2 is 105dBμV at the output of the buffer amplifier 14, i.e. at the output of 25 of the tuner. The maximum gain G2 is 10dBμV and the TOP-level TOP2 at the input of the second tuner section is 105dBμV.

Calculations concerning the minimum required input level for a quasi error free reception of digital OFDM-signals with several kinds of modulation on the OFDM-carriers have the result, that the minimum input level required for the most difficult OFDM with a 64QAM (7/8) is 34dBμV, and the minimum input level required for the most easy OFDM with QPSK, QPSK, is 16dBμV. For the minimum required input level, the automatic gain control of the tuner must not attenuate the gain because of the resulting deterioration of signal/noise-ratio. In case of the minimum input level being 34dBμV digital channel, a 35dB stronger analog neighbor (N±1) channel will have a level of 69dBμV. With a standard tuner gain of 45dBμV, proper signal processing will be impossible due to a much too high output signal. For a situation of an N±2 neighbor channel with 50dB more level, signal processing will even be much more difficult compared to the 35dB of N±1 neighbor channels. In view of this, the total gain of the tuner is lowered from the standard 45dB to 35dBμV when high signal levels are present at the input of the tuner, this being realized by the second AGC which reduces the gain of the second tuner section to zero, so that the total gain is only that of the first tuner section 2, which has the maximum value of G2=35dB. In case of even higher signal levels at the tuner input, the first AGC-loop will additionally reduce g1.

With the specified settings of the receiver circuit, the following situations can occur:

1. The signal level at the tuner input is 16dBμV for digital transmission or 15dBμV for analog transmission, no neighbor channels being present. The tuner is providing 45dB total gain = g1 + g2, to have negligible noise contribution of the IF amplifier/demodulator,

2. the signal level at the tuner input is 16dBμV for digital transmission with one 35dB higher analog neighbor channel. The tuner is providing 45dB gain = g1 + g2 to have negligible noise contribution of the IF amplifier,

3. the signal level at the tuner input is 34dBμV for digital transmission, no neighbor channels being present. The tuner gain is unchanged, no change in noise,

4. the signal level is 34dBμV for digital, one analog neighbor channel of 35dB above is present. In this case the input level is 69dB, the output level of the first tuner section is 69dBμV + 35dB gain, i.e. 104dBμV which reduces the gain of the second tuner section to 1dBμV as the second AGC-loop controls the gain g2 such that the output of the tuner is MOUT2. Due to the fact, that the input gain g1 is unchanged, i.e. the signal level at the tuner input is below the TOP1, the first AGC-loop is not active, g1 is unchanged. The realized AGC attenuation will have a minimum influence on the overall signal/ noise-ratio,

5. the signal level at the tuner input is 60dBμV for analog transmission, no neighbor channels being present. This input level is below TOP1, therefore, the first AGC-loop is inactive; the output of the first tuner section is therefore 60dBμV + 35dBμV, which is exactly TOP2, therefore the second AGC-loop is inactive; the tuner gain is 45dBμV, there is no change in noise,

6. the signal level at the tuner input is 60dBμV for analog transmission, two equal strong analog neighbors being present. The total input voltage is therefore 70dBμV, the first AGC-loop is inactive, g1 is 35dBμV, the output of the first tuner section is at MOUT1, therefore the second AGC-loop is active, reducing the gain of the second tuner section to zero, the influence of the gain attenuation is minimum on noise,

7. the signal level is 70dBμV for analog transmission with two equal strong neighbor channels. The total input level is 80dBμV, the first AGC-loop is therefore active, reducing the output of the first tuner section to MOUT1, i.e. 105dB, g1 being reduced to 25dB. The second AGC-loop is activated, reducing the gain g2 of the second tuner section to zero, MOUT2 is 105dB,

8. higher signal levels at the tuner input result in more gain reduction of the first tuner section, the gain g2 of the second tuner section being zero due to the activated second AGC-loop.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

## Claims

1. Television receiver circuit including:

   a tuner (1) including a tuner Automatic Gain Control (30, 40) for controlling the gain of the tuner (1), and
   a first IF-section (60) being coupled to an output (25) of the tuner (1), the first IF-section being designed for processing analog TV signals,

   **characterized by**
   a second IF-section (80) for processing digital TV-signals,
   wherein the tuner Automatic Gain Control (30, 40) includes a first AGC-loop (30) for controlling a gain (g1) of a first tuner section (2) at the tuner input, and a second AGC-loop (40) for controlling a gain (g2) of a second tuner section (3) at the tuner output.

2. Television receiver circuit according to claim 1, wherein, upon an increasing signal level at the tuner input, the second AGC-loop (40) starts to reduce the gain (g2) of the second tuner section (3) before the first AGC-loop (30) starts reducing the gain (g1) of the first tuner section (2).

3. Television receiver circuit according to claim 1, wherein the input of the second tuner section (3) is the output of the first tuner section (2), wherein the first tuner section (2) has a pre-given maximum output level (MOUT1) at the first tuner section input, a maximum gain (G1) and a pre-given Take Over Point-level (TOP1) at the first tuner section input, at which the first AGC-loop (30) is activated, wherein the second tuner section (3) has a pre-given maximum output level (MOUT2) at the second tuner section output (25), a maximum gain (G2) and a pre-given TOP-level (TOP2) at the second tuner section input at which the second AGC-loop (40) is activated, and wherein TOP2 is MOUT1-G2.

4. Television receiver circuit according to claim 3, wherein the maximum output level (MOUT1) of the first tuner section (2) and the maximum output level (MOUT2) of the second tuner section (3) are identical.

**5.** Television receiver circuit according to claim 2, wherein the maximum output level (MOUT1) of the first tuner section is 105 dBμV, the maximum gain (G1) is 35dB and the TOP-level (TOP1) at the input of the first tuner section is 70dBμV.

**6.** Television receiver circuit according to claim 3, wherein the maximum output level (MOUT2) of the second tuner section is 105dBμV, the maximum gain (G2) is 10dBμV and the TOP-level (TOP2) at the input of the second tuner section is 105dBμV.

**7.** Television receiver circuit according to claim 1, wherein the first tuner section (2) includes an input amplifier (8), and wherein the second tuner section (3) includes a buffer amplifier (14), the output of the second tuner section (3) being the output of the tuner, **characterized by** an AGC-detector (15) coupled at the output of the buffer amplifier (14), the first AGC-loop (30) deriving the AGC-signal from the AGC-detector (15) and feeding the AGC-control signal to the input amplifier (8).

**8.** Television receiver circuit according to claim 7, wherein the second AGC-loop (40) derives the AGC-signal from the AGC-detector (15) and feeds the AGC-control signal to the input of the buffer amplifier (14).

**9.** Tuner (1) including a tuner Automatic Gain Control (30, 40) for controlling the gain of the tuner (1), wherein the tuner Automatic Gain Control (30, 40) includes a first AGC-loop (30) for controlling a gain (g1) of a first tuner section (2) at the tuner input, and a second AGC-loop (40) for controlling a gain (g2) of a second tuner section (3) at the tuner output.

FIG.1

FIG.2

FIG.3

EP 1 331 811 A1

# EP 1 331 811 A1

**European Patent Office**

## EUROPEAN SEARCH REPORT

**Application Number**

EP 02 07 5302

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 60056 A (KWONG KAM C ;PANG MIEU N (NL); TAN HWEE B (NL); YEO ALAN C L (NL);) 16 August 2001 (2001-08-16) | 9 | H04N5/44 |
| A | * abstract * <br> * page 2, line 10 - line 23; figure 1 * | 1 | |
| A | PATENT ABSTRACTS OF JAPAN <br> vol. 018, no. 566 (E-1622), <br> 28 October 1994 (1994-10-28) <br> & JP 06 205325 A (HITACHI LTD), <br> 22 July 1994 (1994-07-22) <br> * abstract * | 1,3,9 | |
| A | PATENT ABSTRACTS OF JAPAN <br> vol. 1999, no. 09, <br> 30 July 1999 (1999-07-30) <br> & JP 11 098426 A (SAMSUNG ELECTRON CO LTD), 9 April 1999 (1999-04-09) <br> * abstract * | 1,9 | |
| A | DE 43 30 549 A (THOMSON BRANDT GMBH) 16 March 1995 (1995-03-16) <br> * abstract * <br> * column 1, line 61 - column 2, line 11; figure 1 * | 1,9 | **TECHNICAL FIELDS SEARCHED (Int.Cl.7)** <br> H04N <br> H03G |

The present search report has been drawn up for all claims

| Place of search | Date of completion of the search | Examiner |
|---|---|---|
| THE HAGUE | 16 July 2002 | Fuchs, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

10

## ANNEX TO THE EUROPEAN SEARCH REPORT
## ON EUROPEAN PATENT APPLICATION NO.                EP 02 07 5302

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2002

| Patent document cited in search report | | Publication date | Patent family member(s) | | Publication date |
|---|---|---|---|---|---|
| WO 0160056 | A | 16-08-2001 | WO<br>EP | 0160056 A2<br>1190568 A2 | 16-08-2001<br>27-03-2002 |
| JP 06205325 | A | 22-07-1994 | JP | 3128371 B2 | 29-01-2001 |
| JP 11098426 | A | 09-04-1999 | KR<br>CN<br>US | 265236 B1<br>1211141 A<br>6353463 B1 | 15-09-2000<br>17-03-1999<br>05-03-2002 |
| DE 4330549 | A | 16-03-1995 | DE | 4330549 A1 | 16-03-1995 |

EPO FORM P0459

For more details about this annex : see Official Journal of the European Patent Office, No. 12/82